# EUROPEAN PATENT SPECIFICATION

(11) **EP 4 375 157 B1**
(45) Date of publication and mention of the grant of the patent: **18.11.2026**
(21) Application number: 22845749.5
(22) Date of filing: 28.06.2022
(51) Int. Cl.: G06V 10/26, G06V 10/20, G06V 20/56, G06V 20/58, B60W 50/14, B60Q 1/26, B60Q 1/48, B60R 1/20, B60R 1/26, B60R 99/00

(54) **CONTROL DEVICE FOR VEHICLE**
STEUERUNGSVORRICHTUNG FÜR EIN FAHRZEUG
DISPOSITIF DE COMMANDE POUR UN VÉHICULE

(30) Priority: 19.07.2021 JP 2021118650
(43) Date of publication of application: 29.05.2024
(73) Proprietor: KOITO MANUFACTURING CO., LTD., Minato-ku, Tokyo, 108-8711 (JP)
(72) Inventor: SASAKI, Masaru, Shizuoka-shi, Shizuoka 424-8764 (JP); KOBAYASHI, Norihiko, Shizuoka-shi, Shizuoka 424-8764 (JP)
(74) Representative: Zimmermann, Tankred Klaus
(86) International application number: PCT/JP2022/025761
(87) International publication number: WO 2023/002813

(56) References cited:
- WO-A1-2016/163294
- WO-A1-2020/036108
- JP-A- 2013 186 668
- JP-A- 2014 144 725
- JP-A- 2019 196 065
- JP-B1- 7 031 799
- JP-B1- 7 031 799
- US-A1- 2012 044 090
- US-A1- 2013 120 572
- US-A1- 2018 029 641
- US-A1- 2018 118 095

## Description

### TECHNICAL FIELD

The present invention relates to a control device for a vehicle including a projection device that projects a notification pattern for notifying the behavior of a subject vehicle on a region including, e.g., a road surface in the vicinity of the vehicle such as an automobile and an imaging device that obtains a desired image of the region.

### BACKGROUND ART

For traffic safety, there has been proposed a vehicle including a projection device that projects, on a road surface, a notification pattern for notifying a third party such as a pedestrian or other vehicles of the behavior of an automobile such as a state during traveling or stop or a traveling direction. Patent Literature 1 describes a technique of projecting a notification pattern including a required pattern on a road surface in front or rear of a subject vehicle by a projection device mounted on the automobile, such as a projector. When the third party visually recognizes this notification pattern, the third party can recognize the behavior of the automobile and avoid contact with the automobile in advance.

On the other hand, there has also been proposed a technique of ensuring traffic safety by displaying an image of surroundings of an automobile captured by an imaging device on a monitor and visually recognizing the image by a driver. Patent Literature 2 proposes an image processing technique of processing a captured image to acquire a desired image.

### CITATION LIST

### PATENT LITERATURE

Patent Literature 1: JP-A-2020-55519
Patent Literature 2: JP-A-2019-219816
Patent Literature 3: JP-7031799-B1

### SUMMARY OF INVENTION

### PROBLEMS TO BE SOLVED BY INVENTION

In the automobile including the projection device or the imaging device for the traffic safety as described above, the notification pattern projected on the road surface may be imprinted on the captured image. For this reason, the projected notification pattern and various lines drawn (painted) on the road surface, such as a parking line, are simultaneously displayed on the monitor, and when visually recognizing the monitor, the driver may erroneously recognize the notification pattern as the parking line.

For example, in a case where the automobile is parked while being moved backward, if the notification pattern is imprinted on the captured image, there is a probability that the notification pattern is erroneously recognized as a parking line drawn on the road surface, and there is a case where the driver cannot park the automobile by moving the automobile to a correct position.

An object of the present invention is to provide a control device for a vehicle capable of obtaining a desired image on which a notification pattern is not imprinted when an adjacent region is imaged in a vehicle including a projection device that projects a notification pattern on a road surface.

### SOLUTION TO PROBLEMS

The present invention relates to a control device for acquiring an image from which a required notification pattern has been removed from a captured image in a vehicle including a projection device that projects the notification pattern on a region in the vicinity of a subject vehicle and an imaging device that images the region in the vicinity of the subject vehicle, the control device including an image processor that stores the projected notification pattern in a storage and removes the notification pattern stored in the storage unit from the captured image.

In the present invention, the image processor stores, as the notification pattern, an image of a notification pattern projected in advance as an initial setting in the storage. Alternatively, the image processor obtains a difference between a first image captured in a state of the notification pattern being not projected and a second image captured in a state of the notification pattern being projected, and stores, as the notification pattern, an image of the difference in the storage. Alternatively, the image processor compares a first image captured by imaging a region in the vicinity of the subject vehicle at a predetermined position in a state of the notification pattern being projected with a second image captured by imaging a region in the vicinity of the subject vehicle having moved from the predetermined position, and stores an image matching between the first image and the second image as the notification pattern in the storage.

In the present invention, for example, the projection device includes a projector that projects a notification pattern on a region in the vicinity of the subject vehicle, the imaging device includes a camera that images the region in the vicinity of the subject vehicle, and the camera images the notification pattern and a reference line drawn on the region in the vicinity of the subject vehicle, and the image processor acquires an image from which the notification pattern has been removed. In this case, the projection device projects the notification pattern on a region in rear of the subject vehicle, the imaging device images a parking lot in the region in rear of the subject vehicle, and the reference line is a parking line indicating a parking position in the parking lot.

The control device of the present invention preferably further includes a monitor that displays an image acquired by the image processor, and the monitor preferably displays a guide line for guiding a driver to move the subject vehicle.

### EFFECTS OF INVENTION

According to the present invention, in the vehicle including the projection device that projects the notification pattern, even when the imaging device images the region including the notification pattern, a desired image from which the notification pattern has been removed can be acquired.

### BRIEF DESCRIPTION OF DRAWINGS

Fig. 1 is a schematic perspective view of an automobile equipped with a control device of the present invention as viewed from the rear;
Fig. 2 is a block configuration diagram including the control device;
Fig. 3(a) is a schematic configuration view of a rear projector, and Fig. 3(b) is an optical diagram showing a notification pattern projection state;
Fig. 4 is a view showing a form of projection of the notification pattern;
Fig. 5(a) is a schematic plan view and Fig. 5(b) is a monitor display image upon parking of the automobile;
Fig. 6 is a flowchart of a first control mode;
Fig. 7 is a timing chart of the first control mode;
Fig. 8 is a monitor display image in the first control mode;
Fig. 9 is a flowchart of a second control mode;
Fig. 10 is a captured image or a monitor display image in the second control mode; and
Fig. 11 is a flowchart of a third control mode.

### DESCRIPTION OF EMBODIMENTS

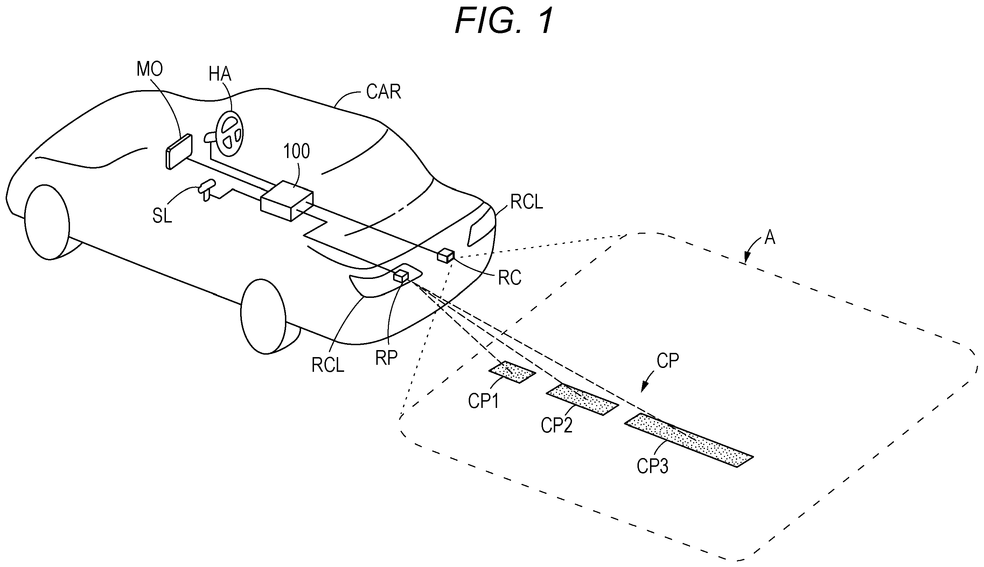

Next, an embodiment of the present invention will be described with reference to the drawings. Fig. 1 is a schematic perspective view of an automobile CAR equipped with a control device of the present invention as viewed from the rear. Rear combination lamps RCL are each arranged on the left and right of a vehicle body rear portion of the automobile CAR. A rear projector RP is provided integrally with one of the rear combination lamps RCL, here, part of the left combination lamp. The rear projector RP, which will be described in detail later, is configured as part of a projection device that projects a required pattern or a linear notification pattern CP on a road surface in rear of the automobile CAR when operated.

A rear camera (back camera) RC is arranged in part of a trunk lid of the vehicle body rear portion of the automobile CAR, and images a region in rear of the automobile CAR, particularly, a region A including a road surface in rear of the automobile CAR. The rear camera RC may be arranged in an upper portion of a license plate, or may be arranged at an upper position of a rear window in the vehicle interior of the automobile CAR. In addition, a monitor MO is arranged at a position facing a driver's seat on a dashboard in the vehicle interior of the automobile CAR, and is configured to allow a driver to visually recognize an image displayed on a monitor screen. The monitor MO is connected to a vehicle ECU (electronic control unit) 100 forming the control device of the present invention, and sensors (not shown) that detect the operation states of a steering wheel device HA and a shift lever SL of the automobile CAR are connected to the vehicle ECU 100. The rear camera RC, the monitor MO, and the sensors are configured as part of a driving assistance device as described later.

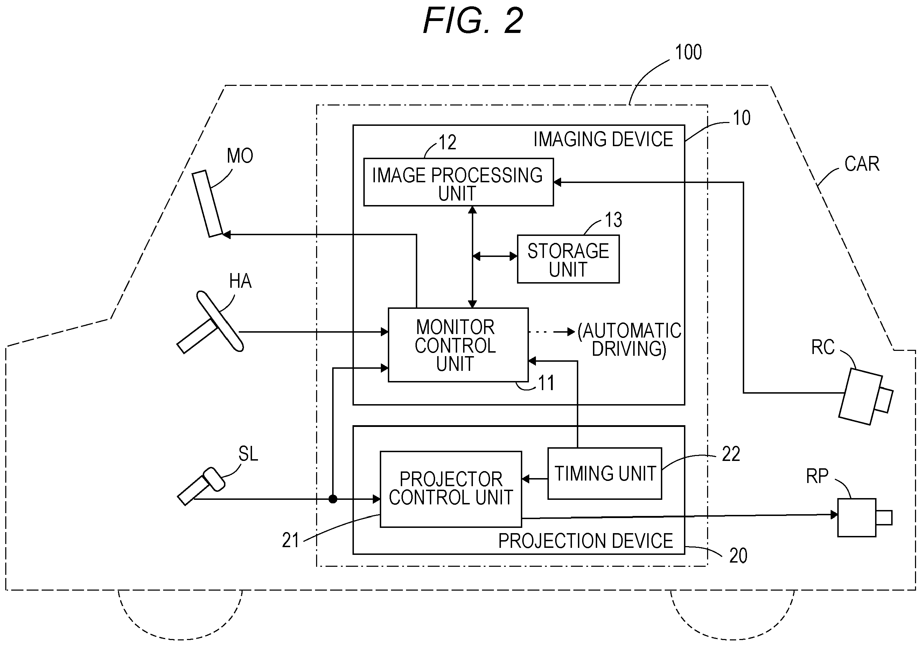

Fig. 2 is a block configuration diagram, and elements corresponding to elements shown in Fig. 1 are denoted by the same reference numerals. The control device includes the vehicle ECU 100, and includes an imaging device 10 and a projection device 20. Note that instead of the vehicle ECU 100, a lamp ECU (ECU that integrally controls a lamp configured such that a camera, a projection device, and a lamp unit are integrated) provided in a lamp or an ECU (ECU that integrally controls electronic devices such as a lamp, a sensor, and a wiper around the rear) provided for a rear zone integrally with a vehicle body. An imaging signal of the rear camera RC is input to the vehicle ECU 100, and driving information indicating the driving state of the automobile is input to the vehicle ECU100. As the driving information, steering information indicating a traveling direction (backward movement direction) and output from the steering wheel device HA and backward movement information from the shift lever SL operated by the driver when the automobile moves backward is input. The backward movement information from the shift lever SL is also input to the projection device 20.

The projection device 20 includes a projector control unit 21. The projector control unit 21 controls the rear projector RP based on the input backward movement information, and projects the notification pattern CP on the rear road surface when the automobile CAR moves backward.

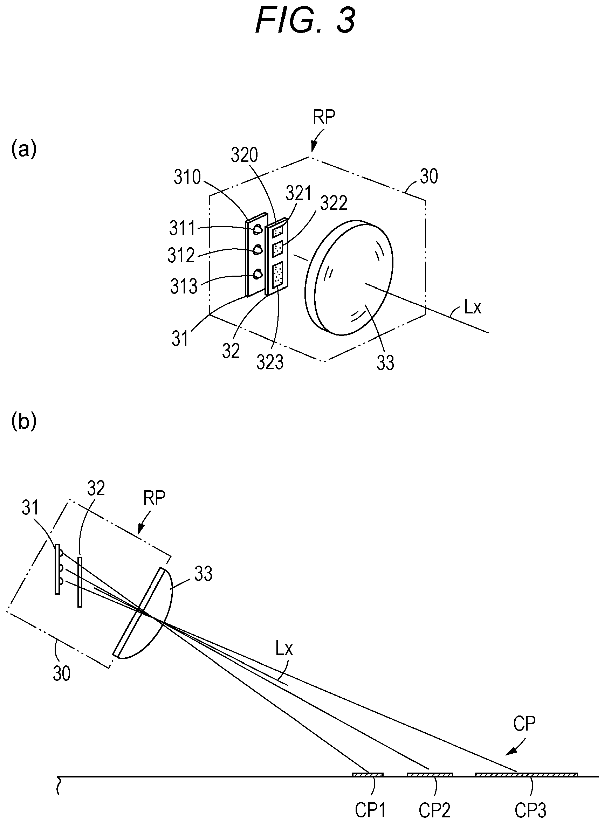

As shown in a schematic configuration in Fig. 3(a), a light source 31, a pattern mask 32, and a projection lens 33 are incorporated in a housing 30 of the rear projector RP. In the light source 31, three light emitting diodes (LEDs) 311 to 313 that emit white light from the upper side to the lower side are mounted on a light source board 310. Here, these LEDs will be referred to as a first LED 311 to a third LED 313 in order from the upper side. In the pattern mask 32, three rectangular translucent windows 321 to 323 having different side lengths corresponding to the LEDs 311 to 313 are opened in a non-translucent board 320. Here, these translucent windows will be referred to as a first translucent window 321 to a third translucent window 323 in order from the upper side. For example, milky white plates that allow light to diffuse and transmit through the translucent windows may be arranged in the translucent windows 321 to 323. The pattern mask 32 is arranged at a predetermined tilt angle with respect to an optical axis Lx at a position in rear of the focal point of the projection lens 33. Note that in a case where no tilt angle is provided, a projection length increases as a projection position becomes farther, and therefore, the length of one side of the translucent window may be equal among the first translucent window 321 to the third translucent window 323.

As shown in Fig. 3(b), when the first LED 311 to the third LED 313 emit light, the rear projector RP projects, in a focused state, real images of the first translucent window 321 to the third translucent window 323 of the pattern mask 32 as a first pattern CP1 to a third pattern CP3 on the road surface in rear of the automobile. As shown in Fig. 1, the notification pattern CP is projected with the first pattern CP1 to the third pattern CP3.

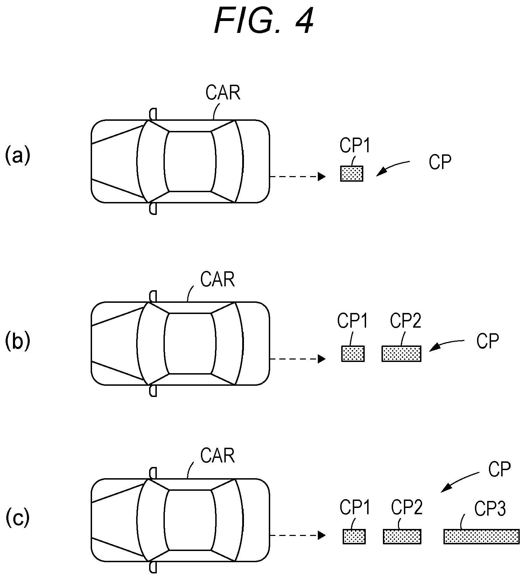

In the projection form of the notification pattern CP, when the first LED 311 emits light, the first pattern CP1 is projected at the closest position in rear of the automobile by the first translucent window 321 as shown in Fig. 4(a). Next, when the second LED 312 emits light, the second pattern CP2 is projected at a position in rear of the first pattern CP1 by the second translucent window 322 as shown in Fig. 4(b). Further, when the third LED 313 emits light, the third pattern CP3 is projected at a position in rear of the second pattern CP2 by the third translucent window 323 as shown in Fig. 4(c).

As shown in Fig. 2, the projection device 20 includes a timing unit 22, and in response to a timing signal from the timing unit 22, the projector control unit 21 can simultaneously or individually control the timing of the light source 31 of the rear projector RP emitting light, i.e., the timing of the first LED 311 to the third LED 313 emitting light. Thus, when the first LED 311 to the third LED 313 simultaneously emit light, the notification pattern CP (CP1 to CP3) in Fig. 4(c) is projected as one pattern. When the first LED 311 to the third LED 313 emit light in this order, the first pattern CP1 to the third pattern CP3 are sequentially projected, and a so-called sequential pattern is projected.

Further, the projector control unit 21 can intermittently control light emission from the first LED 311 to the third LED 313 in a required cycle by control based on the timing unit 22. That is, projection of the respective notification patterns CP in Figs. 4(a) to 4(c) is intermittently controlled in the required cycle. This cycle is such a cycle that a state of the notification pattern CP being not projected cannot be recognized due to the residual image effect of human eyes and the notification pattern CP appears to be continuously projected when visually recognized by a human.

As described above, when the rear projector RP projects the notification pattern CP on the road surface in the region in the vicinity of the automobile, a third party, i.e., a pedestrian present outside the automobile CAR or occupants in other vehicles, visually recognizes the notification pattern CP so that the third party can recognize that the automobile CAR will move in the direction toward the notification pattern CP, here, the automobile will move backward. Thus, communication between the automobile and the third party is enabled, and traffic safety is ensured.

On the other hand, as shown in Fig. 2, the imaging device 10 includes a monitor control unit 11, an image processing unit 12, and a storage unit 13. The image processing unit 12 performs image processing for acquiring an image to be displayed on the monitor MO from an imaging signal captured by the rear camera RC. In addition, the image processing unit 12 can extract the entirety or part of the acquired image and store the image in the storage unit 13. Particularly, the image of the notification pattern CP projected by the rear projector RP can be extracted from the captured image. Since various image processing methods have already been proposed as these image processing and extraction methods, detailed description of these image processing and extraction methods will be omitted.

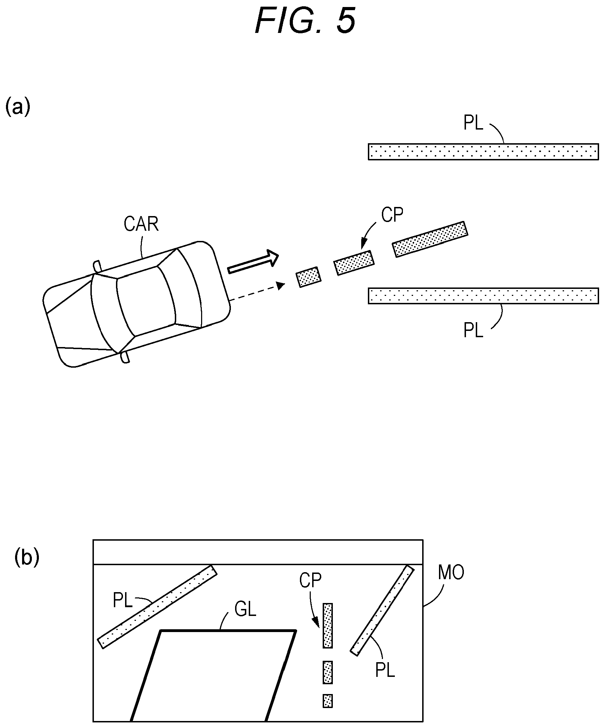

The monitor control unit 11 controls an image to be displayed on the monitor MO. For example, when the backward movement information from the shift lever SL is input in a situation where the automobile CAR is parked while moving backward as shown in Fig. 5(a), the monitor control unit 11 can basically display an image captured by the rear camera RC, i.e., an image of a region including a road surface in rear of the automobile CAR as shown in Fig. 5(b), on the monitor MO. This image includes images of parking lines PL as reference lines drawn (painted) on the road surface to guide a suitable parking position, and the image of the notification pattern CP projected by the rear projector RP.

Further, for driving assistance, the monitor control unit 11 can also calculate the backward movement direction of the automobile CAR from the steering information from the steering wheel device HA, and display a guide pattern indicating the direction in which the automobile moves backward, such as a guide line GL, on the monitor MO.

As described above, when the guide line GL is displayed on the monitor MO together with the image including the road surface in rear of the automobile by the monitor control unit 11, the driver easily moves the automobile backward to the preferable parking position by operating the steering wheel such that the displayed guide line GL is aligned with the parking lines PL while visually recognizing the image on the monitor MO or such that the guide line GL enters a region sandwiched by the parking lines PL.

Note that the monitor control unit 11 may be connected to an automatic driving device (not shown in Fig. 2) and position information on the parking lines PL displayed on the monitor MO may be transmitted to the automatic driving device. With this configuration, the automatic driving device can also control steering of the automobile based on the position information on the parking lines PL and execute automatic driving control for guiding the automobile to the preferable parking position.

When the linear notification pattern (first pattern to third pattern) CP is projected on the rear road surface by the rear projector RP while the automobile is moving backward as shown in Fig. 5(a), the notification pattern CP captured by the rear camera RC is also simultaneously displayed on the monitor MO as shown in Fig. 5(b). That is, the linear parking lines PL and the linear notification pattern CP similar to the linear parking lines PL are simultaneously displayed. When these patterns are displayed, the driver may mix up the notification pattern CP and the parking lines PL with each other, erroneously recognize the notification pattern CP as the parking line PL, and operate the steering wheel to align the guide line GL with the notification pattern CP.

In addition, in the automatic driving control, when the position information on the parking lines PL and the notification pattern CP is transmitted from the monitor control unit 11, the parking lines PL and the notification pattern CP are mixed up with each other, and it is difficult to output accurate position information on the parking lines PL. For this reason, the automatic driving device cannot perform automatic guidance to the parking position based on accurate recognition of the parking lines PL.

The driving assistance system solves the driving assistance problem caused due to misrecognition between the notification pattern CP and the parking lines PL in the monitor control unit 11. As a control mode for solving this problem, for example, the following first to third control modes may be considered.

### (First Control Mode)

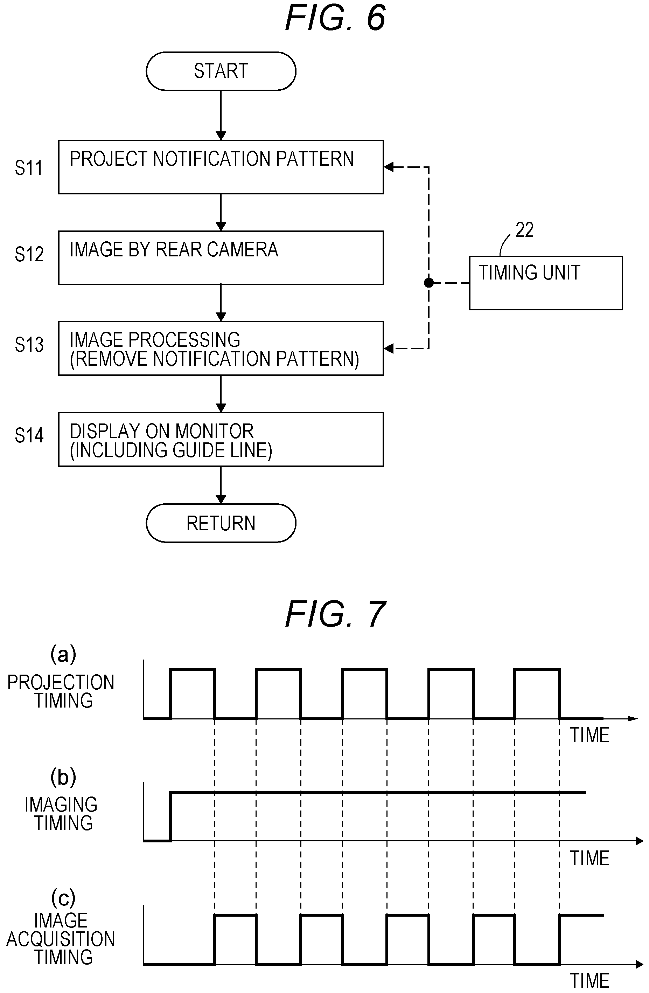

Fig. 6 is a flowchart of the first control mode, and Fig. 7 is a timing chart of the first control mode. The projector control unit 21 of the projection device 20 controls the rear projector RP to project the notification pattern CP (S11). For example, the first pattern CP1 to the third pattern CP3 are simultaneously projected. Upon such projection, the pattern is intermittently projected in the required cycle based on a timing signal from the timing unit 22 as shown in Fig. 7(a). This cycle is such a cycle that a state of the notification pattern CP being not projected cannot be recognized due to the residual image effect of human eyes as described above. Thus, the third party can visually recognize the notification pattern CP as if the notification pattern CP is continuously projected, and the safety is ensured.

On the other hand, the imaging device 10 performs imaging by the rear camera RC (S12). In this example, as shown in Fig. 7(b), imaging is continuously performed over time. Then, the image processing unit 12 performs image processing on the obtained imaging signal (S13). In this image processing, image processing synchronized with the timing of projecting the notification pattern CP is executed based on the timing signal from the timing unit 22. That is, as shown in Fig. 7(c), the image processing unit 12 performs processing of removing an image (frame) captured at the timing of projecting the notification pattern CP. In this manner, the image captured at the timing when the notification pattern CP is not projected is obtained.

As described above, even when the rear camera RC continuously performs imaging, the image processed by the image processing unit 12 is the image at the timing when the notification pattern CP is not projected by the rear projector RP. The monitor control unit displays the image obtained by this processing on the monitor (S14). Thus, the image displayed on the monitor MO is an image on which no notification pattern CP is imprinted.

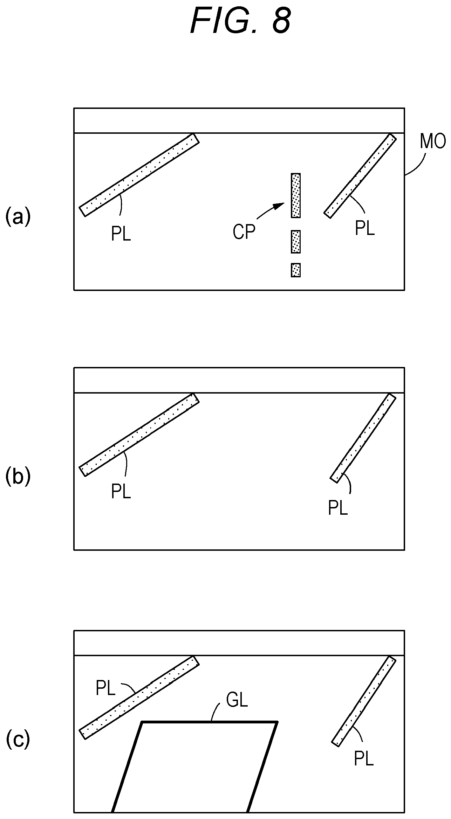

Note that Fig. 8(a) is an image captured when the notification pattern CP is projected, and Fig. 8(b) is an image captured when the notification pattern CP is not projected. Thus, when the guide line GL is displayed together with the image of Fig. 8(b) by the monitor control unit 11, the images of the parking lines PL from which the notification pattern CP has been removed and the guide line GL are displayed together on the monitor MO as shown in Fig. 8(c). Thus, the driver who has visually recognized the monitor MO does not erroneously recognize the notification pattern CP as the parking line PL, and the driver can operate the steering wheel to correctly align the guide line GL with the parking lines PL and drive the automobile to the suitable parking position.

In the first control mode, although not shown in the figure, the timing of imaging by the rear camera RC may be controlled in the imaging device 10. In this case, imaging is performed at timing different from the timing when the notification pattern CP shown in Fig. 7(a) is projected, i.e., at the timing shown in Fig. 7(c). Thus, the notification pattern CP is not projected at the time of imaging, and no notification pattern is imprinted on the captured image. In this mode, the processing in the image processing unit 12 can be simplified or omitted.

The example where in the first control mode, the first pattern CP1 to the third pattern CP3 of the notification pattern CP are simultaneously projected has been described. However, the control can also be similarly performed in a sequential projection case where the first pattern CP1 to the third pattern CP3 are sequentially projected as described above. That is, image processing of removing an image captured at the timing when at least one of the first pattern CP1, the second pattern CP2, or the third pattern CP3 is projected may be performed. Alternatively, imaging may be performed at the timing when at least one of the first pattern CP1, the second pattern CP2, or the third pattern CP3 is not projected. Also in this case, the sequentially-projected notification pattern CP is not displayed on the monitor MO, and therefore, erroneous recognition by the driver can be prevented and suitable driving assistance can be performed. However, in the first control mode, it is not always easy to control the timing of imaging and image acquisition by the imaging device 10. For this reason, in the present invention, the following second and third control modes are employed.

### (Second Control Mode)

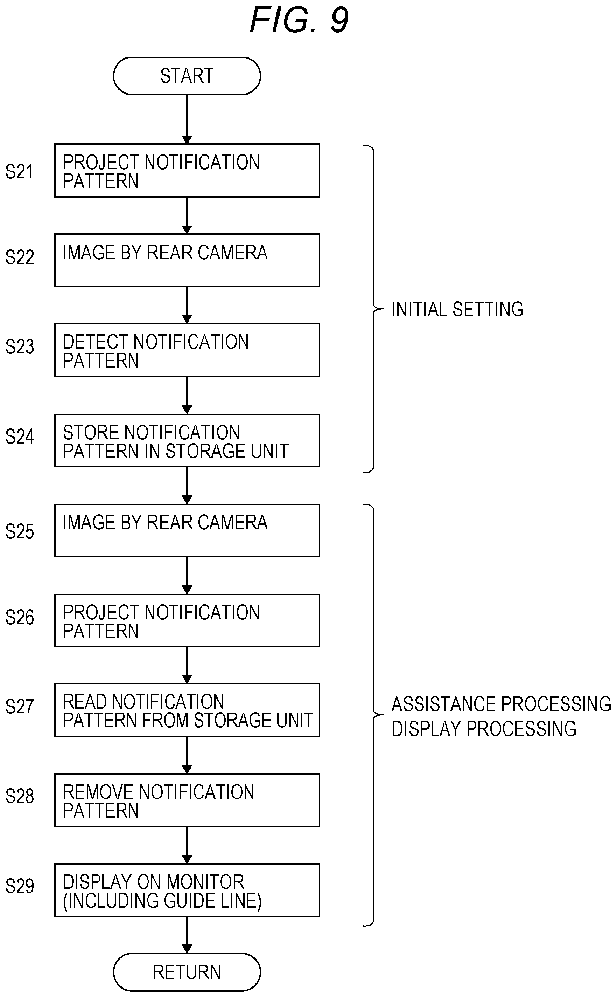

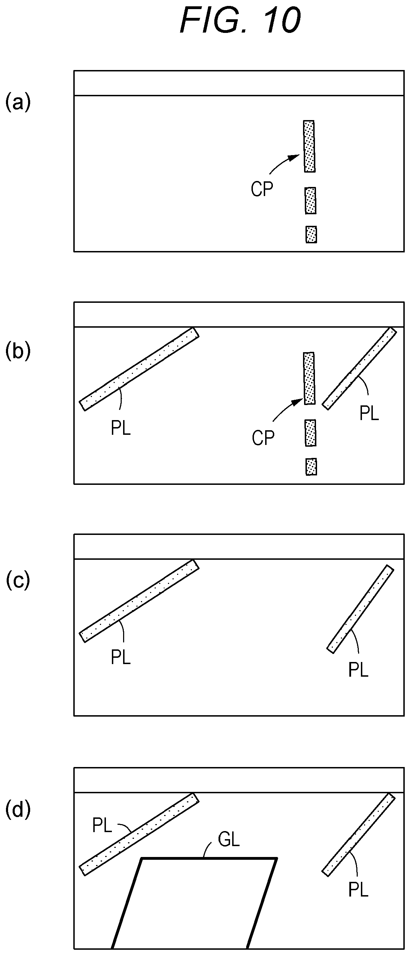

Fig. 9 is a flowchart of the second control mode, and Fig. 10 is a captured image or a monitor image. First, initial setting is executed. In this initial setting, the rear projector RP is controlled by the projector control unit 21 at a location where at least the parking lines are not drawn on the road surface, and the notification pattern CP is projected on the road surface (S21). Next, the imaging device 10 performs imaging by the rear camera RC (S22). As shown in Fig. 10(a), the projected notification pattern CP is imprinted on the captured image. Then, the image processing unit 12 detects the captured image of the notification pattern CP (S23), and stores the image of the notification pattern CP in the storage unit 13 (S24). This initial setting is performed in an automobile manufacturer or dealer. Alternatively, the initial setting may be performed before the user starts driving the automobile.

When the initially-set automobile is parked by moving backward, the rear camera RC performs imaging (S25). At this time, the rear projector RP also projects the notification pattern (S26). The image captured at this time is, for example, one shown in Fig. 10(b), and shows the notification pattern CP and the parking lines PL.

Next, the image processing unit 12 reads the image of the notification pattern stored in the storage unit 13 by initial setting (S27). Then, image processing of removing the read image of the notification pattern CP from the currently-captured image is executed (S28), and an image from which the image of the notification pattern CP has been removed is acquired. Thereafter, under the control of the monitor control unit 11, the image subjected to the image processing is displayed on the monitor MO (S28). Thus, the displayed image is an image from which the notification pattern CP has been removed as shown in Fig. 10(c).

The position and shape of the image captured by the rear camera RC during parking are changed on the image while the automobile is moving backward, but the position of the notification pattern CP projected on the road surface is constant relative to the rear camera RC. Thus, the notification pattern CP stored in the storage unit 13 by the initial setting is an image with a certain shape at a certain position on the captured image, and is not changed even by backward movement of the automobile. Consequently, it is possible to acquire an image from which only the notification pattern CP has been removed. As shown in Fig. 10(d), the monitor control unit 11 displays this image on the monitor MO, and at the same time, displays the guide line GL for driving assistance on the monitor MO as in the first control mode (S29). The display position of the guide line GL on the monitor MO is changed according to changes in the movement direction of the automobile as described above.

As described above, only the image from which the notification pattern CP has been removed, here, only the parking lines PL and the guide line GL, is displayed on the monitor MO, and the driver who has visually recognized the monitor MO does not erroneously recognize the notification pattern CP as the parking line PL. The driver can drive the automobile to the suitable parking position by operating the steering wheel to correctly align the guide line GL displayed on the monitor MO with the parking lines PL.

In the second control mode, the control can also be similarly performed in a case where the notification pattern CP is sequentially projected. For example, upon the initial setting, a video when the first pattern CP1 to the third pattern CP3 are sequentially projected is captured, and is stored as the image of the notification pattern CP in the storage unit 13. The image processing unit 12 executes image processing of removing the image of the notification pattern CP stored in the storage unit 13 from the video captured by the rear camera RC. Thus, an image from which the sequentially-projected notification pattern CP has been removed is displayed on the monitor MO. Note that when the notification pattern CP is removed, the timing of projecting the notification pattern CP may be recognized with reference to the timing signal from the timing unit 22, and the notification pattern CP may be removed at the timing synchronized with the projection timing.

Note that in Steps S21 to S23 in the initial setting, for example, a first image captured first in a state of the notification pattern being not projected and a second image captured in a state of the notification pattern being projected may be acquired, and the image of the notification pattern may be acquired by detecting a difference between the first image and the second image. In this initial setting, the dimension, e.g., the length, of the projected notification pattern may be stored. In addition, at this time, the shape of the notification pattern deformed along the inclination or asperities of the road surface on which the notification pattern is projected may be stored, and the accuracy can be enhanced.

### (Third Control Mode)

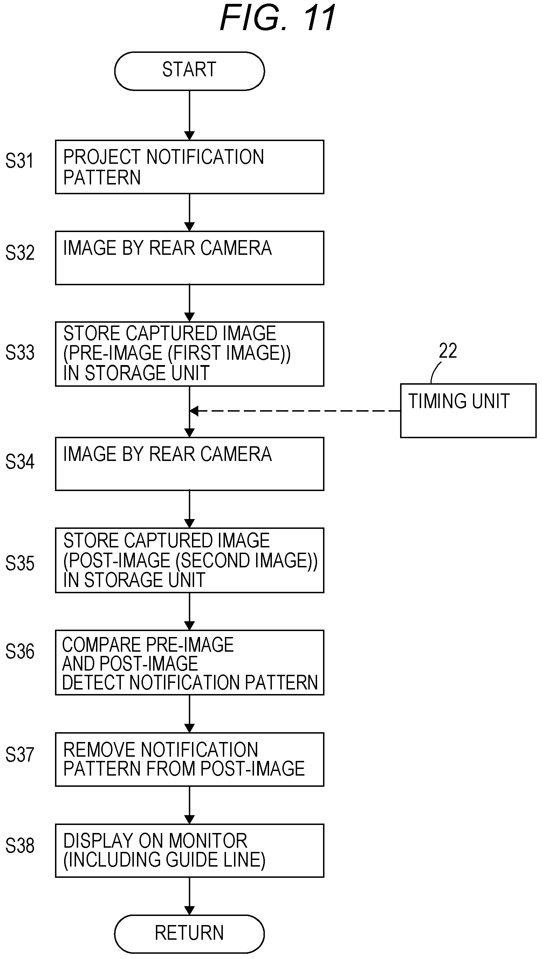

Fig. 11 is a flowchart of the third control mode, and can be taken as a modification of the second control mode. In the third control mode, the initial setting performed in the second control mode is not performed. When the automobile is driven and is actually parked in a parking lot by moving backward, the rear projector RP projects the notification pattern CP (S31). At the same time, imaging by the rear camera RC is performed (S32). On the captured pre-image (first image), the projected notification pattern CP is imprinted together with the image of the road surface of the parking lot, i.e., the parking lines PL. That is, the image is as shown in Fig. 8(a).

The image processing unit 12 stores the pre-image in the storage unit 13 (S33). Then, after a lapse of an extremely-short time after backward movement of the automobile, imaging is performed again, and the post-image (second image) obtained at this time is further stored in the storage unit 13 (S34). Then, the image processing unit 12 compares the stored pre-image and post-image with each other, and extracts an image that matches between both images (S35). As described in the second control mode, the position and shape of the images of the parking lines PL captured by the rear camera RC are changed while the automobile is moving backward, but the image of the projected notification pattern CP is not changed even while the automobile is moving backward. Thus, the image that matches between both images when the pre-image and the post-image are compared with each other is the notification pattern CP.

The image processing unit 12 performs image processing of removing the extracted image, i.e., the image of the notification pattern CP, from the post-image, and acquires the image subjected to the removal processing (S36). This image is similar to the image shown in Fig. 8(b). Such an image includes the parking lines PL, but does not include the notification pattern CP. The monitor control unit 11 displays the acquired image on the monitor MO (S37), and displays the guide line GL for driving assistance on the monitor MO as similarly shown in Fig. 8(c) (S38).

This control is repeated at required time intervals while the automobile is moving backward. In this repetition, the last-stored image is the post-image, and the image stored immediately before such a post-image is the pre-image. Thus, the monitor MO displays the image of the rear of the automobile which sequentially changes with backward movement of the automobile, and also displays the guide line GL which changes with steering while the automobile is moving backward. However, the notification pattern CP is not displayed. Consequently, the driver who has visually recognized the monitor MO does not erroneously recognize the parking lines PL, and can operate the steering wheel to correctly align the guide line GL with the parking lines PL and drive the automobile to the suitable parking position.

Note that in the third control mode, in a case where the notification pattern CP is sequentially projected, the shape of the notification pattern CP on the pre-image and the post-image may change over time. Thus, in this case, similarly to the second control mode, a technique of comparing the pre-image and the post-image after having estimated a temporal shape change in the notification pattern CP with reference to the timing signal from the timing unit 22 may be employed.

As compared with the second control mode, the third control mode does not require the initial setting prepared for removing the notification pattern CP. In addition, it is possible to appropriately cope with a case where the attachment posture of the rear projector RP with respect to the vehicle body of the automobile is changed for some reason and the projection position of the notification pattern CP with respect to the automobile is changed from an initial position, i.e., a case where the image of the notification pattern CP imprinted on the image is changed from an initial state.

In the above-described first to third control modes, driving assistance in a case where the image captured by the rear camera is displayed on the monitor and the driver steers the automobile backward while viewing the monitor has been described. However, the present invention can also be applied to driving assistance in which the image captured by the rear camera as described above and the automatic driving control is performed based on the image processed by the image processing unit. That is, by using the parking line information correctly recognized in the first to third control modes, it is possible to solve the problem that guidance to the suitable parking position cannot be performed due to recognition of the notification pattern as the parking line in the automatic driving device.

In the description above, driving assistance when the automobile is driven backward to the parking lot has been described. However, the present invention can also be applied to a case where a notification pattern is projected on a road surface in a region in front of or at the side of the automobile and driving assistance is executed based on a reference line imprinted on the image of such a region. For example, in a case where the automobile travels forward, when parallel lines are displayed on the left and the right as a notification pattern to indicate the width of the automobile, these lines may be mixed up with lines indicating a traffic lane on a road. Alternatively, in a case where the automobile starts from a stop state or the automobile changes its traveling direction to the left or right, when a notification pattern is displayed, the notification pattern may be mixed up with various lines drawn on a road surface in a region in the vicinity of the notification pattern.

In the present invention, the notification pattern to be projected is not limited to the pattern shape described in the embodiment as long as the notification pattern has a shape which may be mixed up with the parking line. Alternatively, the present invention can be applied to a case where there is a probability that when driving assistance is performed using a reference line drawn on a road surface, the drawn pattern is mixed up with a projected notification pattern.

The present international application claims priority based on Japanese Patent Application No. 2021-118650 filed on July 19, 2021.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above, as long as they are encompassed by the appended claims.

### LIST OF REFERENCE SIGNS

- 10: Imaging Device
- 11: Monitor Control Unit
- 12: Image Processing Unit (Image Processor)
- 13: Storage Unit (Storage)
- 20: Projection Device
- 21: Projector Control Unit
- 22: Timing Unit
- 100: Vehicle ECU (Control Device)
- RC: Rear Camera (Imaging Device)
- RP: Rear Projector (Projection Device)
- MO: Monitor
- HA: Steering Wheel Device
- SL: Shift Lever

## Claims

1. A control device for a vehicle including:
a projection device (20) configured to project a notification pattern on a region of a road surface in a vicinity of the vehicle; and
an imaging device (10) configured to capture images of the region of the road surface in the vicinity of the vehicle;
**characterized by** the imaging device (10) comprising:
an image processor configured to store the projected notification pattern in a storage and to remove the notification pattern stored in the storage from an image captured by the imaging device (10); and
a monitor control unit (11) configured to control an image to be displayed on a monitor (MO),
wherein the monitor (MO) is configured to allow a driver of the vehicle to visually recognize an image displayed on a monitor screen, and
wherein the image displayed on the monitor screen is an image processed by the image processor (12).

2. The control device for the vehicle according to claim 1, wherein the image processor (12) is configured to store, as the notification pattern, an image of a notification pattern projected in advance as an initial setting in the storage.

3. The control device for the vehicle according to claim 1, wherein the image processor (12) is configured to obtain a difference between a first image captured in a state of the notification pattern being not projected and a second image captured in a state of the notification pattern being projected, and is configured to store, as the notification pattern, an image of the difference in the storage.

4. The control device for the vehicle according to claim 1, wherein the image processor (12) is configured to compare a first image captured by imaging a region in a vicinity of the vehicle at a predetermined position in a state of the notification pattern being projected with a second image captured by imaging a region in a vicinity of the vehicle having moved from the predetermined position, and to store an image matching between the first image and the second image as the notification pattern in the storage.

5. The control device for the vehicle according to any one of claims 2 to 4, wherein
the projection device (20) includes a projector configured to project the notification pattern on a region in a vicinity of the vehicle,
the imaging device (10) includes a camera configured to image the region in the vicinity of the vehicle, and
the camera is configured to image the notification pattern and a reference line drawn on the region in the vicinity of the vehicle, and the image processor is configured to acquire an image from which the notification pattern has been removed.

6. The control device for the vehicle according to claim 5, wherein
the projection device (20) is configured to project the notification pattern on a region in rear of the vehicle,
the imaging device (10) is configured to image a parking lot in the region in rear of the vehicle, and
the reference line is a parking line indicating a parking position in the parking lot.

7. The control device for the vehicle according to claim 6, wherein the notification pattern is a linear pattern, and the parking line is a linear line.

8. The control device for the vehicle according to any one of claims 5 to 7,
wherein the monitor (MO) is configured to display a guide line for guiding a driver to move the subject vehicle.

9. The control device for the vehicle according to any one of claims 1 to 8, wherein the monitor (MO) is arranged at a position facing a driver's seat.

## Patentansprüche

1. Eine Steuervorrichtung für ein Fahrzeug, die folgende Merkmale umfasst:
eine Projektionsvorrichtung (20), die dazu konfiguriert ist, ein Benachrichtigungsmuster auf eine Region einer Straßenoberfläche in einer Umgebung des Fahrzeugs zu projizieren; und
eine Bilderzeugungsvorrichtung (10), die dazu konfiguriert ist, Bilder der Region der Straßenoberfläche in der Umgebung des Fahrzeugs aufzunehmen;
**dadurch gekennzeichnet, dass** die Bilderzeugungsvorrichtung (10) folgende Merkmale aufweist:
einen Bildprozessor, der dazu konfiguriert ist, das projizierte Benachrichtigungsmuster in einem Speicher zu speichern und das in dem Speicher gespeicherte Benachrichtigungsmuster aus einem Bild zu entfernen, das durch die Bilderzeugungsvorrichtung (10) aufgenommen wurde; und
eine Monitorsteuereinheit (11), die dazu konfiguriert ist, ein Bild zu steuern, das auf einem Monitor (MO) anzuzeigen ist,
wobei der Monitor (MO) dazu konfiguriert ist, es einem Fahrer des Fahrzeugs zu ermöglichen, ein Bild, das auf einem Monitorbildschirm angezeigt wird, visuell zu erkennen, und
wobei das Bild, das auf dem Monitorbildschirm angezeigt ist, ein durch den Bildprozessor (12) verarbeitetes Bild ist.

2. Die Steuervorrichtung für das Fahrzeug gemäß Anspruch 1, wobei der Bildprozessor (12) dazu konfiguriert ist, als das Benachrichtigungsmuster ein Bild eines im Voraus projizierten Benachrichtigungsmusters als eine Anfangseinstellung in dem Speicher zu speichern.

3. Die Steuervorrichtung für das Fahrzeug gemäß Anspruch 1, wobei der Bildprozessor (12) dazu konfiguriert ist, eine Differenz zwischen einem ersten Bild, das in einem Zustand aufgenommen wird, in dem das Benachrichtigungsmuster nicht projiziert wird, und einem zweiten Bild, das in einem Zustand aufgenommen wird, in dem das Benachrichtigungsmuster projiziert wird, zu erhalten, und dazu konfiguriert ist, als das Benachrichtigungsmuster ein Bild der Differenz in dem Speicher zu speichern.

4. Die Steuervorrichtung für das Fahrzeug gemäß Anspruch 1, wobei der Bildprozessor (12) dazu konfiguriert ist, erstes Bild, das durch Bilderzeugung einer Region in einer Umgebung des Fahrzeugs an einer vorbestimmten Position in einem Zustand aufgenommen wurde, in dem das Benachrichtigungsmuster projiziert wurde, mit einem zweiten Bild zu vergleichen, das durch Bilderzeugung einer Region in einer Umgebung des Fahrzeugs, die sich von der vorbestimmten Position bewegt hat, aufgenommen wurde, und ein Bild, das zwischen dem ersten Bild und dem zweiten Bild übereinstimmt, als das Benachrichtigungsmuster in dem Speicher zu speichern.

5. Die Steuervorrichtung für das Fahrzeug gemäß einem der Ansprüche 2 bis 4, wobei
die Projektionsvorrichtung (20) einen Projektor umfasst, der dazu konfiguriert ist, das Benachrichtigungsmuster auf eine Region in einer Umgebung des Fahrzeugs zu projizieren,
die Bilderzeugungsvorrichtung (10) eine Kamera umfasst, die dazu konfiguriert ist, die Region in der Umgebung des Fahrzeugs abzubilden, und
die Kamera dazu konfiguriert ist, das Benachrichtigungsmuster und eine Referenzlinie, die auf die Region in der Umgebung des Fahrzeugs gezeichnet ist, abzubilden, und der Bildprozessor dazu konfiguriert ist, ein Bild zu erfassen, aus dem das Benachrichtigungsmuster entfernt wurde.

6. Die Steuervorrichtung für das Fahrzeug gemäß Anspruch 5, wobei
die Projektionsvorrichtung (20) dazu konfiguriert ist, das Benachrichtigungsmuster auf eine Region hinter dem Fahrzeug zu projizieren,
die Bilderzeugungsvorrichtung (10) dazu konfiguriert ist, einen Parkplatz in der Region hinter dem Fahrzeug abzubilden, und
die Referenzlinie eine Parklinie ist, die eine Parkposition auf dem Parkplatz angibt.

7. Die Steuervorrichtung für das Fahrzeug gemäß Anspruch 6, wobei das Benachrichtigungsmuster ein lineares Muster ist und die Parklinie eine lineare Linie ist.

8. Die Steuervorrichtung für das Fahrzeug gemäß einem der Ansprüche 5 bis 7,
wobei der Monitor (MO) dazu konfiguriert ist, eine Führungslinie zum Führen eines Fahrers anzuzeigen, um das betreffende Fahrzeug zu bewegen.

9. Die Steuervorrichtung für das Fahrzeug gemäß einem der Ansprüche 1 bis 8, wobei der Monitor (MO) an einer Position angeordnet ist, die einem Fahrersitz zugewandt ist.

## Revendications

1. Dispositif de commande pour un véhicule, incluant :
un dispositif de projection (20) configuré pour projeter un motif de notification sur une zone d'une surface de route située à proximité du véhicule ; et
un dispositif d'imagerie (10) configuré pour capturer des images de la zone de la surface de route située à proximité du véhicule ;
**caractérisé en ce que** le dispositif d'imagerie (10) comprend :
un processeur d'image configuré pour stocker le motif de notification projeté dans une mémoire et pour supprimer le motif de notification stocké dans la mémoire à partir d'une image capturée par le dispositif d'imagerie (10) ; et
une unité de commande de moniteur (11) configurée pour commander une image devant être affichée sur un moniteur (MO),
dans lequel le moniteur (MO) est configuré pour permettre à un conducteur du véhicule de reconnaître visuellement une image affichée sur un écran de moniteur, et
dans lequel l'image affichée sur l'écran de moniteur est une image traitée par le processeur d'image (12).

2. Dispositif de commande pour le véhicule selon la revendication 1, dans lequel le processeur d'image (12) est configuré pour stocker, en tant que motif de notification, une image d'un motif de notification projeté à l'avance en tant que réglage initial dans la mémoire.

3. Dispositif de commande pour le véhicule selon la revendication 1, dans lequel le processeur d'image (12) est configuré pour obtenir une différence entre une première image capturée dans un état dans lequel le motif de notification n'est pas projeté et une deuxième image capturée dans un état dans lequel le motif de notification est projeté, et est configuré pour stocker, en tant que motif de notification, une image de cette différence dans la mémoire.

4. Dispositif de commande pour le véhicule selon la revendication 1, dans lequel le processeur d'image (12) est configuré pour comparer une première image capturée en filmant une zone située à proximité du véhicule à une position prédéterminée, dans un état dans lequel le motif de notification est projeté, avec une deuxième image capturée en filmant une zone située à proximité du véhicule présentant un déplacement de la position prédéterminée, et pour stocker une correspondance entre la première image et la deuxième image en tant que motif de notification dans la mémoire.

5. Dispositif de commande pour le véhicule selon l'une quelconque des revendications 2 à 4, dans lequel
le dispositif de projection (20) inclut un projecteur configuré pour projeter le motif de notification sur une zone située à proximité du véhicule,
le dispositif d'imagerie (10) inclut une caméra configurée pour filmer la zone située à proximité du véhicule, et
la caméra est configurée pour filmer le motif de notification et une ligne de référence tracée sur la zone située à proximité du véhicule, et le processeur d'images est configuré pour acquérir une image à partir duquel le motif de notification a été supprimé.

6. Dispositif de commande pour le véhicule selon la revendication 5, dans lequel
le dispositif de projection (20) est configuré pour projeter le motif de notification sur une zone située à l'arrière du véhicule,
le dispositif d'imagerie (10) est configuré pour filmer un stationnement situé à l'arrière du véhicule, et
la ligne de référence est une ligne de stationnement indiquant une position de stationnement dans le stationnement.

7. Dispositif de commande pour le véhicule selon la revendication 6, dans lequel le motif de notification est un motif linéaire et la ligne de stationnement est une ligne linéaire.

8. Dispositif de commande pour le véhicule selon l'une quelconque des revendications 5 à 7,
dans lequel le moniteur (MO) est configuré pour afficher une ligne de guidage destinée à guider un conducteur à déplacer le véhicule concerné.

9. Dispositif de commande pour le véhicule selon l'une quelconque des revendications 1 à 8, dans lequel le moniteur (MO) est disposé à une position faisant face à un siège de conducteur.
